# EUROPEAN PATENT APPLICATION

(11) **EP 4 648 509 A1**
(43) Date of publication of application: **12.11.2025**
(21) Application number: 23913952.0
(22) Date of filing: 03.01.2023
(51) Int. Cl.: H04W 72/0446, H04W 72/563, H04W 74/08

(54) **RESOURCE SELECTION METHOD AND APPARATUS FOR MULTIPLE CONSECUTIVE SLOTS**

(71) Applicant: Beijing Xiaomi Mobile Software Co., Ltd., Beijing 100085 (CN)
(72) Inventor: ZHAO, Wensu, Beijing 100085 (CN); ZHAO, Qun, Beijing 100085 (CN)
(74) Representative: Stöckeler, Ferdinand
(86) International application number: PCT/CN2023/070233
(87) International publication number: WO 2024/145792

(57) **Abstract**

The present disclosure belongs to the technical field of communications. Provided are a resource selection method and apparatus for multiple consecutive slots, and a device and a storage medium. The method comprises: determining m transport blocks (TBs) which simultaneously arrive at a physical layer of a terminal device, wherein m is a positive integer greater than 1; determining a resource selection order of the m TBs; and selecting a resource for each of the m TBs in sequence according to the determined order, wherein when a resource is selected for each TB, a resource located in an adjacent slot to a resource(s) of one or more TBs present in a higher layer of the terminal device, which resource(s) has/have been selected but not used for actual transmission, is preferentially selected. In the present disclosure, a method of "resource selection for multiple consecutive slots" is provided, such that resource selection for multiple consecutive slots can be implemented according to a determined resource selection order, thereby reducing the impact of LBT failure, and improving the channel access efficiency.

## Description

### TECHNICAL FIELD

The disclosure relates to the field of communication technology, and in particular to a method and an apparatus for continuous multi-slot resource selection, a device, and a storage medium.

### BACKGROUND

In a communication system, in an unlicensed frequency band, that is, a shared frequency band, listen before talk (LBT) is required. However, a result of LBT is uncertain. If the LBT fails, data cannot be sent on the selected resources. Thus, to reduce an impact caused by the LBT failure, after one successful LBT, a transport block (TB) may be transmitted over a plurality of continuous slots, such as repeated transmission of a plurality of same TBs over the plurality of continuous slots, or transmission of a plurality of different TBs over the plurality of continuous slots. This may reduce the impact of the LBT failure and improve the channel access efficiency. However, when the plurality of TBs arrive simultaneously, how a user equipment (UE) sequentially performs resource selection for the plurality of TBs and selects a continuous multi-slot resource becomes an urgent problem to solve.

### SUMMARY

The disclosure provides a method and an apparatus for continuous multi-slot resource selection, a device, and a storage medium. When there are m transport blocks (TBs) simultaneously arrive at a physical layer of a user equipment (UE), resources may be sequentially selected for each TB among the m TBs based on an order of resource selection determined. As such, m resources that are continuous in a time domain may be determined, thus achieving continuous multi-slot resource selection, reducing the impact of listen before talk (LBT) failure, and improving the channel access efficiency.

An aspect of embodiments of the disclosure provides a method for continuous multi-slot resource selection, applied to a shared frequency band of a sidelink, performed by a UE. The method includes: determining m transport blocks (TBs) that simultaneously arrive at a physical layer of the UE, in which m is a positive integer greater than 1; determining an order of resource selection for the m TBs; and sequentially selecting resources for each TB among the m TBs based on the order determined.

An aspect of embodiments of the disclosure provides a method for continuous multi-slot resource selection, applied to a shared frequency band of a sidelink, performed by a UE. The method includes: determining m TBs that simultaneously arrive at a physical layer of the UE, in which m is a positive integer greater than 1; and selecting resources for each TB by simultaneously performing random resource selection in a candidate resource set of each TB among the m TBs, in which a maximum length of continuous slots formed by m resources in a time domain selected is L, and L is a positive integer.

An aspect of embodiments of the disclosure provides an apparatus for continuous multi-slot resource selection, applied to a shared frequency band of a sidelink, configured in a UE. The apparatus includes: a determining module, configured to determine m TBs that simultaneously arrive at a physical layer of the UE, in which m is a positive integer greater than 1; the determining module is further configured to determine an order of resource selection for the m TBs; and a selecting module, configured to sequentially select resources for each TB among the m TBs based on the order determined.

An aspect of embodiments of the disclosure provides an apparatus for continuous multi-slot resource selection, applied to a shared frequency band of a sidelink, configured in a UE. The apparatus includes: a determining module, configured to determine m TBs that simultaneously arrive at a physical layer of the UE, in which m is a positive integer greater than 1; and a selecting module, configured to select resources for each TB by simultaneously performing random resource selection in a candidate resource set of each TB among the m TBs, in which a maximum length of continuous slots formed by m resources in a time domain selected is L, and L is a positive integer.

Another aspect of embodiments of the disclosure provides a UE. The UE includes a processor and a memory, in which the memory stores a computer program, which, when executed by the processor, cause the UE to implement the method according to the aspect of embodiments described above.

Another aspect of embodiments of the disclosure provides a communication device. The communication device includes: a processor and an interface circuit; in which the interface circuit is configured to receive code instructions and transmit the code instructions to the processor; and the processor is configured to execute the code instructions to implement the method according to the aspect of embodiments described above.

Another aspect of embodiments of the disclosure provides a computer-readable storage medium. The computer-readable storage medium is configured to store instructions, in which when the instructions are executed, the method according to the aspect of embodiments described above is implemented.

In summary, in embodiments of the disclosure, the m TBs that simultaneously arrive at the physical layer of the UE are determined, in which m is a positive integer greater than 1; the order of resource selection for the m TBs is determined; and the resources are sequentially selected for each TB among the m TBs based on the order determined. The embodiments of the disclosure provide a mechanism for continuous multi-slot resource selection, which may reduce situations where continuous resources in the time domain cannot be performed when a plurality of TBs arrive simultaneously, and thus enhance the feasibility of continuous multi-slot resource selection. The disclosure provides a processing method for the scenario of "continuous multi-slot resource selection". When the m TBs simultaneously arrive at the physical layer of the UE, the resources may be sequentially selected for each TB among the m TBs based on the order of resource selection determined. As such, the m resources that are continuous in the time domain may be determined, thus achieving the continuous multi-slot resource selection, reducing the impact of LBT failure, and improving the channel access efficiency.

### BRIEF DESCRIPTION OF THE DRAWINGS

The above-mentioned and/or additional aspects and advantages of the disclosure will become apparent and readily appreciated from the following description of embodiments, taken in combination with the accompanying figures.
FIG. 1 is a schematic diagram illustrating an example of a method for continuous multi-slot resource selection provided in an embodiment of the disclosure.
FIG. 2 is a flow chart illustrating a method for continuous multi-slot resource selection provided in an embodiment of the disclosure.
FIG. 3 is a flow chart illustrating a method for continuous multi-slot resource selection provided in another embodiment of the disclosure.
FIG. 4 is a flow chart illustrating a method for continuous multi-slot resource selection provided in another embodiment of the disclosure.
FIG. 5 is a flow chart illustrating a method for continuous multi-slot resource selection provided in another embodiment of the disclosure.
FIG. 6 is a flow chart illustrating a method for continuous multi-slot resource selection provided in another embodiment of the disclosure.
FIG. 7 is a flow chart illustrating a method for continuous multi-slot resource selection provided in another embodiment of the disclosure.
FIG. 8 is a flow chart illustrating a method for continuous multi-slot resource selection provided in another embodiment of the disclosure.
FIG. 9 is a flow chart illustrating a method for continuous multi-slot resource selection provided in another embodiment of the disclosure.
FIG. 10 is a block diagram illustrating a structure of an apparatus for continuous multi-slot resource selection provided in an embodiment of the disclosure.
FIG. 11 is a block diagram illustrating a structure of an apparatus for continuous multi-slot resource selection provided in an embodiment of the disclosure.
FIG. 12 is a block diagram illustrating a user equipment (UE) provided in an embodiment of the disclosure.

### DETAILED DESCRIPTION

Reference will now be made in detail to the exemplary embodiments, examples of which are illustrated in the accompanying figures. When the following description refers to the accompanying figures, the same numerals in different figures refer to the same or similar elements unless otherwise indicated. The implementations described in the following exemplary embodiments do not represent all implementations consistent with the embodiments of the disclosure. Rather, they are merely examples of devices and methods consistent with some aspects of the embodiments of the disclosure as recited in the appended claims.

Terms used in the embodiments of the disclosure are for the purpose of describing specific embodiments only, and are not intended to limit the embodiments of the disclosure. As used in the embodiments of this disclosure and the appended claims, the singular forms "a/an" and "the" are also intended to include the plural forms unless the context clearly dictates otherwise. It should also be understood that the term "and/or" as used herein refers to and includes any and all possible combinations of one or more of the associated listed items.

It should be understood that although the embodiments of the disclosure may use the terms first, second, third, etc. to describe various information, the information should not be limited to these terms. These terms are only used to distinguish information of the same type from one another. For example, without departing from the scope of the embodiments of the disclosure, first information may also be called second information, and similarly, second information may also be called first information. Depending on the context, the word "if" and "in case" as used herein may be interpreted as "in a case that" or "when" or "in response to a determination"

Network elements or network devices involved in embodiments of the disclosure may be implemented by a separate hardware device or by software in the hardware device. This is not limited in the embodiments of the disclosure.

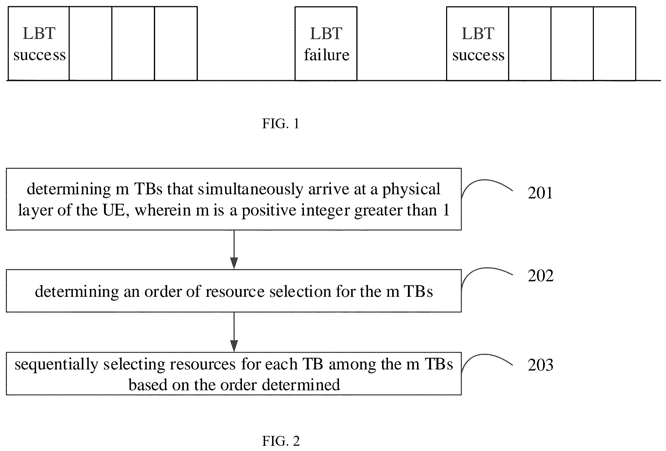

FIG. 1 is a schematic diagram illustrating an example of a method for continuous multi-slot resource selection provided in an embodiment of the disclosure. As shown in FIG. 1, in an unlicensed frequency band, to reduce the impact caused by listen before talk (LBT) failure, transmission of a transport block (TB) over a plurality of continuous slots may be supported after one successful LBT. For example, FIG. 1 shows that after one successful LBT, transmission is performed in three subsequent continuous slots. This is merely an example; transmission may occur over larger or smaller continuous slots.

It should be understood that transmission over the plurality of continuous slots may support transmission of the plurality of continuous TBs over the plurality of continuous slots. Continuous transmission of a plurality of TBs may involve a plurality of different TBs from the same user equipment (UE), repeated transmission of a plurality of same TBs from the same UE, or joint transmission of a plurality of TBs including same TBs and different TBs. To achieve continuous multi-slot transmission, there is a need to select continuous multi-slot resources. However, current systems do not support selection of continuous resources. That is, resource selection among a plurality of TBs is mutually independent, which cannot ensure that the resources selected for the plurality of TBs are continuous. Thus, when a plurality of TBs arrive simultaneously, a higher layer cannot ensure that the resources selected from a candidate resource set corresponding to the TBs are continuous in a time domain. Further, for sequentially arriving TBs, the higher layer typically performs the resource selection for each TB sequentially based on the order of arrival. However, when a plurality of TBs arrive simultaneously, the higher layer cannot determine an order of resource selection for the plurality of TBs, as these TBs do not arrive in order.

The following is a detailed description of a method and an apparatus for continuous multi-slot resource selection, a device, and a storage medium provided in embodiments of the disclosure, with reference to the accompanying figures.

FIG. 2 is a flow chart illustrating a method for continuous multi-slot resource selection provided in an embodiment of the disclosure. The method is performed by a UE. As shown in FIG. 2, the method may include the following steps 201 to 203.

At step 201: m TBs that simultaneously arrive at a physical layer of the UE are determined, in which m is a positive integer greater than 1.

At step 202: an order of resource selection for the m TBs is determined.

At step 203: resources are sequentially selected for each TB among the m TBs based on the order determined.

It should be noted that in an embodiment of the disclosure, the UE may refer to a device that provides voice and/or data connectivity to a user. The UE may communicate with one or more core networks via a radio access network (RAN). The UE may be an internet of things (IoT) terminal, such as a sensor device, a mobile phone (or "cellular" phone), or a computer with the IoT terminal. The UE may be a fixed, portable, pocket-sized, handheld, computer-built-in, or vehicle-mounted device, for example, a station (STA), a subscriber unit, a subscriber station, a mobile station, a mobile, a remote station, an access point, a remote terminal, an access terminal, a user device, or a user agent. Alternatively, the UE may be an unmanned aerial vehicle device. Alternatively, the UE may be an vehicle-mounted device, such as an electronic control unit (ECU) with wireless communication capabilities or a wireless terminal connected to the EC . Alternatively, the UE may be a roadside device, such as a street light, traffic light, or other roadside devices with wireless communication capabilities.

In an embodiment of the disclosure, in an unlicensed frequency band, transmission over a plurality of continuous slots is supported, that is, transmission of a plurality of continuous TBs over a plurality of continuous slots is supported. The technical solution of the disclosure may be applied to sidelink communication on a shared frequency band. The plurality of TBs are automatically generated by the UE based on services. That is, when the services are generated in the UE, the TBs are automatically generated. For example, when there are several services in the UE, the physical layer of the UE may buffer several TBs.

For example, in an embodiment of the disclosure, the m TBs correspond to m resources that are continuous in a time domain.

Further, in an embodiment of the disclosure, the times when the m TBs are generated are the same, i.e., the m TBs simultaneously arrive at the physical layer of the UE and there is no order among the m TBs. Then, the physical layer of the UE is triggered to perform the resource selection simultaneously for the m TBs. For the m TBs, the physical layer of the UE generates N candidate resource sets, where N does not exceed m. For example, the physical layer of the UE may simultaneously report the N candidate resource sets SAs to the higher layer of the UE, such as {SA1, SA2, ..., SAn}, where 1 ≤ N ≤ m. When N=1, the m TBs are same TBs; when N=m, the m TBs are different TBs. The higher layer of the UE selects continuous resources in the time domain for the m TBs that simultaneously arrive at the UE and performs continuous multi-slot transmission.

In an embodiment of the disclosure, determining the order of resource selection for the m TBs includes: when selecting resources for any TB among the m TBs, preferentially selecting, in a candidate resource set of the any TB, resources located in adjacent slots to resources for one or more TBs that are present in a higher layer of the UE and are already selected but not used for actual transmission.

For example, in an embodiment of the disclosure, the UE may determine 1 order for the m TBs, which is the order of the resource selection for the m TBs. The UE may sequentially select, for each TB, resources for initial transmission and resources for retransmission based on the order determined. When selecting resources for any TB, the UE may preferentially select, in the candidate resource set of the any TB, the resources located in adjacent slots to resources for one or more TBs that are present in a higher layer of the UE and are already selected but not used for actual transmission.

In addition, in an embodiment of the disclosure, if m resources that are continuous in the time domain are selected for the m TBs, the m TBs are continuously sent on the m resources selected. If k resources that are continuous in the time domain are selected for the m TBs where 1 < k < m and k is a positive integer, corresponding k TBs are continuously sent on the k resources selected.

Further, in an embodiment of the disclosure, each of the resources selected is a single-slot resource.

For example, in an embodiment of the disclosure, determining the order of resource selection for the m TBs includes: determining the order of resource selection, based on a quantity of resources located in adjacent slots to resources that are already selected by a higher layer of the UE but not used for actual transmission in a candidate resource set of each TB, in which resource selection is performed for a TB corresponding to a candidate resource set each time, the candidate resource set has a largest quantity of the resources located in adjacent slots to the resources that are already selected but not used for actual transmission within the higher layer of the UE.

Further, in an embodiment of the disclosure, when selecting resources for the any TB, if resources present in candidate resource sets of a plurality of TBs have the same quantity as (and are located in adjacent slots to) resources that are already selected by the higher layer of the UE but not used for actual transmission, one TB may be randomly selected from the plurality of TBs to perform the resource selection for the any TB.

For example, in an embodiment of the disclosure, the UE randomly selects any TB among the m TBs and performs random resource selection in the candidate resource set corresponding to the any TB, so that resources for initial transmission and retransmission may be selected. As such, the resources that are already selected but not used for actual transmission may be present in the UE.

For example, in an embodiment of the disclosure, for TB1, j resources are randomly selected, including {rl, r2, r3, r4, ..., rj}, where j is less than or equal to a maximum number of initial transmissions and retransmissions for one TB indicated by the higher layer of the UE.

For example, in an embodiment of the disclosure, the UE may determine one by one, among candidate resource sets corresponding to remaining TBs for which the resource selection has not been performed, a TB corresponding to a candidate resource set that has a largest quantity of resources, which are located in adjacent slots to resources in the higher layer of the UE (which are already selected but not used for actual transmission) for one or more TBs. The UE may preferentially select, for any TB, the resources located in adjacent slots to the resources in the higher layer of the UE that are already selected but not used for actual transmission. The resources selected for the any TB and the resources present in the higher layer of the UE are both defined as the resources that are already selected but not used for actual transmission resources. The UE may further determine, among remaining TBs for which the resource selection has not been performed, which TB has a candidate resource set including the largest quantity of resources that are located in adjacent slots to the resources (that are already selected but not used for actual transmission) in the higher layer of the UE, and then perform the resource selection for the any TB. The above method is performed until the higher layer of the UE has performed the resource selection for each of the m TBs.

For example, in an embodiment of the disclosure, when 4 TBs arrive simultaneously, the physical layer of the UE may simultaneously report 4 candidate resource sets (which may be e.g., SA1, SA2, SA3, SA4 (m=4)) to the higher layer of the UE. The higher layer of the UE needs to select resources with 4 slots that are continuous in the time domain. Assuming that 5 resources for initial transmission and retransmission are selected in each candidate resource set, the higher layer of the UE randomly selects a candidate resource set SA1 corresponding to a TB (e.g., TB1) among the 4 candidate resource sets and selects 5 resources {rl, r2, r3, r4, r5} from the candidate resource set SA1. The higher layer of the UE determines, among the candidate resource sets SA2, SA3, and SA4 corresponding to the remaining 3 TBs, that the candidate resource set SA3 has a largest quantity of resources (i.e., 3 resources located in adjacent slots to the resources that are already selected). That is, resources {yl, y2, y3, y4, y5} are selected from SA3, where y1 is located in an adjacent slot with r1, y2 is located in an adjacent slot with r2, y3 is located in an adjacent slot with r4; while y4 and y5 are not located in adjacent slots to resources present in the higher layer of the UE. Thus, the resources that are present in the higher layer of the UE and are already selected but not used for actual transmission are {r1y1, r2y2, r3, r4y3, r5, y4, y5}. The higher layer of the UE performs the resource selection among the candidate resource sets SA2 and SA4 corresponding to the remaining 2 TBs, and determines that SA2 has a largest quantity of resources (i.e., 2 resources are located in adjacent slots to the resources that are already selected), in which x1 is located in an adjacent slot with y1, x2 is located in an adjacent slot with y3, while x3, x4 and x5 are not located in adjacent slots to resources present in the higher layer of the UE. The resources {x1, x2, x3, x4, x5} are selected. Finally, resources {z1, z2, z3, z4, z5} in SA4 are selected for TB4, in which z1 is located in an adjacent slot with resource x1, and z3 is located in an adjacent slot with resource x2. As such, the higher layer of the UE performs the resource selection for all 4 TBs. Finally, the resources that are present in the higher layer of the UE and are already selected but not used for actual transmission are {r1y1 xlzl, rly2, r3, z2, z4, r4y3x2z3, r5, x3, x4, x5, z5, y4, y5}; then the higher layer of the UE selects two groups of resources with 4 continuous slots in the time domain, i.e., {rlylxlzl, r4y3x2z3}.

In addition, in an embodiment of the disclosure, determining the order of resource selection for the m TBs includes: determining the order of resource selection based on a priority of each TB.

In addition, in an embodiment of the disclosure, the priority of each TB may be preconfigured.

For example, in an embodiment of the disclosure, if priorities of the m TBs are different, the resource selection may be sequentially performed for the m TBs based on a descending order or an ascending order of priorities.

Further, in an embodiment of the disclosure, if the resource selection is sequentially performed for the m TBs based on the descending order of priorities, the UE first performs random resource selection for the TB with the highest priority in the candidate resource set corresponding to the TB; and sequentially performs the resource selection for remaining TBs in respective candidate resource sets of the remaining TBs based on the descending order of priorities. When performing the resource selection for each TB, the UE selects the resources located in adjacent slots to resources for one or more TBs that are present in the higher layer of the UE and are already selected but not used for actual transmission. The resources selected for each TB are defined as the resources that are already selected but not used for actual transmission.

In addition, in an embodiment of the disclosure, determining the order of resource selection for the m TBs includes: determining the order of resource selection based on a packet delay budget (PDB) value of each TB.

In an embodiment of the disclosure, the higher layer of the UE knows the priority of each TB and the PDB value of each TB.

For example, in an embodiment of the disclosure, if PDB values of the m TBs are different, the resource selection may be sequentially performed for the m TBs in an ascending order or a descending order of the PDB values. For example, if the resource selection is performed in the ascending order of PDB values, the resource selection may be preferentially performed for a TB with a small PDB value, i.e., a TB with a high delay requirement.

Further, in an embodiment of the disclosure, if the resource selection is sequentially performed for the m TBs based on the ascending order of PDB values, the UE first performs random resource selection for the TB with the smallest PDB value in the candidate resource set corresponding to the TB; and sequentially performs the resource selection for remaining TBs in respective candidate resource sets of the remaining TBs based on the ascending order of PDB values. When performing the resource selection for each TB, the UE selects the resources located in adjacent slots to resources for one or more TBs that are present in the higher layer of the UE and are already selected but not used for actual transmission. The resources selected for each TB are defined as the resources that are already selected but not used for actual transmission.

In addition, in an embodiment of the disclosure, destination UEs corresponding to each TB are different, and determining the order of resource selection for the m TBs includes: determining the order of resource selection based on a layer 1 destination identification (ID) value of each TB.

For example, in an embodiment of the disclosure, if destination UEs of the m TBs are different, the resource selection may be sequentially performed for the m TBs in an ascending order or a descending order of layer 1 destination ID values of 16 bits corresponding to the m TBs.

Further, in an embodiment of the disclosure, if the resource selection is sequentially performed for the m TBs based on the ascending order of layer 1 destination ID values, the UE first performs random resource selection for the TB with the smallest destination ID value in the candidate resource set corresponding to the TB; and sequentially performs the resource selection for remaining TBs in respective candidate resource sets of the remaining TBs based on the ascending order of layer 1 destination ID values. When performing the resource selection for each TB, the UE selects the resources located in adjacent slots to resources for one or more TBs that are present in the higher layer of the UE and are already selected but not used for actual transmission. The resources selected for each TB are defined as the resources that are already selected but not used for actual transmission.

For example, in an embodiment of the disclosure, determining the order of resource selection for the m TBs includes: determining the order of resource selection based on a time when a higher layer of the UE receives a candidate resource set of each TB.

Further, in an embodiment of the disclosure, if the m TBs arrive simultaneously, there is no order between the TBs, and the physical layer is triggered by the m TBs to simultaneously perform the resource selection at slot n. For the m TBs, the physical layer generates N candidate resource sets, but the physical layer of the UE reports the N candidate resource sets, such as {SA1, SA2, ..., SAn}, to the higher layer of the UE at different times. The UE may determine the order of resource selection based on a time order in which the higher layer of the UE receives the candidate resource set of each TB, that is, the higher layer of the UE first performs the resource selection for the TB corresponding to the first received candidate resource set.

Further, in an embodiment of the disclosure, the method is performed by a higher layer of the UE, the higher layer being a layer above the physical layer. That is, the higher layer is located above the physical layer. For example, the higher layer may refer to a medium access control (MAC) layer.

For example, in an embodiment of the disclosure, the resource selection method applies to following scenarios.

Scenario 1: the m TBs are different TBs. The physical layer of the UE generates and reports m candidate resource sets {SA1, SA2, ..., SAm-1} to the higher layer of the UE.

In the method, the higher layer of the UE selects continuous slot resources for initial transmission or retransmission from the candidate resource set of each TB.

Scenario 2: the m TBs are the same TBs. The physical layer of the UE only generates and reports one candidate resource set {SA1} to the higher layer of the UE.

In the method, the higher layer selects, for each TB, continuous slot resources for initial transmission or retransmission from SA1.

Scenario 3: the m TBs include a same TBs and b different TBs. The physical layer of the UE generates and reports (1+b) candidate resource sets {SA1, SA2, ..., SAb+1} to the higher layer of the UE.

The a same TBs select resources from the same candidate resource set (e.g., SA1). The b different TBs select resources from respective candidate resource sets of the TBs. In the method, the higher layer selects, for each TB, continuous slot resources for initial transmission or retransmission.

In summary, in embodiments of the disclosure, the m TBs that simultaneously arrive at the physical layer of the UE are determined, in which m is a positive integer greater than 1; the order of resource selection for the m TBs is determined; and the resources are sequentially selected for each TB among the m TBs based on the order determined. The embodiments of the disclosure provide a mechanism for continuous multi-slot resource selection, which may reduce situations where continuous resources in the time domain cannot be performed when a plurality of TBs arrive simultaneously, and thus enhance the feasibility of continuous multi-slot resource selection. The disclosure provides a processing method for the scenario of "continuous multi-slot resource selection". When the m TBs simultaneously arrive at the physical layer of the UE, the resources may be sequentially selected for each TB among the m TBs based on the order of resource selection determined. As such, the m resources that are continuous in the time domain may be determined, thus achieving the continuous multi-slot resource selection, reducing the impact of LBT failure, and improving the channel access efficiency.

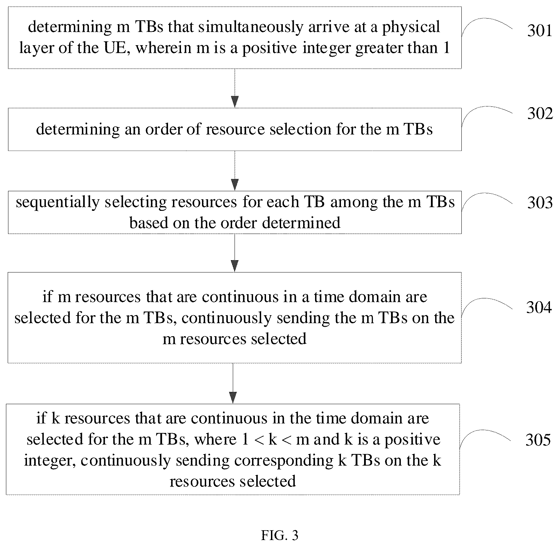

FIG. 3 is a flow chart illustrating a method for continuous multi-slot resource selection provided in an embodiment of the disclosure. The method is performed by a UE. As shown in FIG. 3, the method may include the following steps 301 to 305.

At step 301: m TBs that simultaneously arrive at a physical layer of the UE are determined, in which m is a positive integer greater than 1.

At step 302: an order of resource selection for the m TBs is determined.

At step 303: resources are sequentially selected for each TB among the m TBs based on the order determined.

At step 304: if m resources that are continuous in a time domain are selected for the m TBs, the m TBs are continuously sent on the m resources selected.

At step 305: if k resources that are continuous in the time domain are selected for the m TBs, where 1 < k < m and k is a positive integer, corresponding k TBs are continuously sent on the k resources selected.

In addition, in an embodiment of the disclosure, each of the resources selected is a single-slot resource.

Further, in an embodiment of the disclosure, the method is performed by a higher layer of the UE, the higher layer being a layer above the physical layer. That is, the higher layer is located above the physical layer. For example, the higher layer may refer to a MAC layer.

In summary, in embodiments of the disclosure, the m TBs that simultaneously arrive at the physical layer of the UE are determined, in which m is a positive integer greater than 1; the order of resource selection for the m TBs is determined; and the resources are sequentially selected for each TB among the m TBs based on the order determined; if m resources that are continuous in the time domain are selected for the m TBs, the m TBs are continuously sent on the m resources selected; and if k resources that are continuous in the time domain are selected for the m TBs, where 1 < k < m and k is a positive integer, the corresponding k TBs are continuously sent on the k resources selected. The embodiments of the disclosure provide a mechanism for continuous multi-slot resource selection, which may reduce situations where continuous resources in the time domain cannot be performed when a plurality of TBs arrive simultaneously, and thus enhance the feasibility of continuous multi-slot resource selection. The embodiments of the disclosure specifically disclose a solution for sending the TB. The embodiments of the disclosure provide a processing method for the scenario of "continuous multi-slot resource selection". When the m TBs simultaneously arrive at the physical layer of the UE, the resources may be sequentially selected for each TB among the m TBs based on the order of resource selection determined. As such, the m resources that are continuous in the time domain may be determined, thus achieving the continuous multi-slot resource selection, reducing the impact of LBT failure, and improving the channel access efficiency.

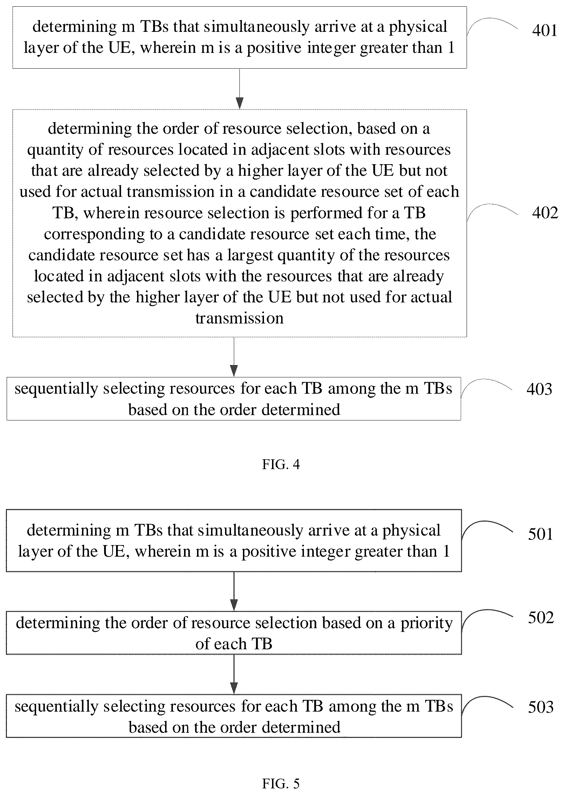

FIG. 4 is a flow chart illustrating a method for continuous multi-slot resource selection provided in an embodiment of the disclosure. The method is performed by a UE. As shown in FIG. 4, the method may include the following steps 401 to 403.

At step S401: m TBs that simultaneously arrive at a physical layer of the UE are determined, in which m is a positive integer greater than 1.

At step S402: the order of resource selection is determined based on a quantity of resources located in adjacent slots to resources that are already selected by a higher layer of the UE but not used for actual transmission in a candidate resource set of each TB, in which resource selection is performed for a TB corresponding to a candidate resource set each time, the candidate resource set has a largest quantity of the resources located in adjacent slots to the resources that are already selected by the higher layer of the UE but not used for actual transmission.

At step S403: resources are sequentially selected for each TB among the m TBs based on the order determined.

Further, in an embodiment of the disclosure, when selecting resources for the any TB, if resources present in candidate resource sets of a plurality of TBs have the same quantity as (and are located in adjacent slots to) resources that are already selected by the higher layer of the UE but not used for actual transmission, one TB may be randomly selected from the plurality of TBs to perform the resource selection for the any TB.

For example, in an embodiment of the disclosure, the UE randomly selects any TB among the m TBs and performs random resource selection in the candidate resource set corresponding to the any TB, so that resources for initial transmission and retransmission may be selected. As such, the resources that are already selected but not used for actual transmission may be present in the UE.

For example, in an embodiment of the disclosure, for TB1, j resources are randomly selected, including {rl, r2, r3, r4, ..., rj}, where j is less than or equal to a maximum number of initial transmissions and retransmissions for one TB indicated by the higher layer of the UE.

For example, in an embodiment of the disclosure, the UE may determine one by one, among candidate resource sets corresponding to remaining TBs for which the resource selection has not been performed, a TB corresponding to a candidate resource set that has a largest quantity of resources, which are located in adjacent slots to resources in the higher layer of the UE (which are already selected but not used for actual transmission) for one or more TBs. The UE may preferentially select, for any TB, the resources located in adjacent slots to the resources in the higher layer of the UE that are already selected but not used for actual transmission. The resources selected for the any TB and the resources present in the higher layer of the UE are both defined as the resources that are already selected but not used for actual transmission resources. The UE may further determine, among remaining TBs for which the resource selection has not been performed, which TB has a candidate resource set of the TB including the largest quantity of the resources that are located in adjacent slots to the resources (that are already selected but not used for actual transmission)in the higher layer of the UE, and then perform the resource selection for the any TB. The above method is performed until the higher layer of the UE has performed the resource selection for each of the m TBs.

For example, in an embodiment of the disclosure, when 4 TBs arrive simultaneously, the physical layer of the UE may simultaneously report 4 candidate resource sets (which may be e.g., SA1, SA2, SA3, SA4 (m=4)) to the higher layer of the UE. The higher layer of the UE needs to select resources with 4 slots that are continuous in the time domain. Assuming that 5 resources for initial transmission and retransmission are selected in each candidate resource set, the higher layer of the UE randomly selects a candidate resource set SA1 corresponding to a TB (e.g., TB1) among the 4 candidate resource sets and selects 5 resources {rl, r2, r3, r4, r5} from the candidate resource set SA1. The higher layer of the UE determines, among the candidate resource sets SA2, SA3, and SA4 corresponding to the remaining 3 TBs, that the candidate resource set SA3 has a largest quantity of resources (i.e., 3 resources located in adjacent slots to the resources that are already selected). That is, resources {yl, y2, y3, y4, y5} are selected from SA3, where y1 is located in an adjacent slot with r1, y2 is located in an adjacent slot with r2, y3 is located in an adjacent slot with r4; while y4 and y5 are not located in adjacent slots to resources present in the higher layer of the UE. Thus, the resources that are present in the higher layer of the UE and are already selected but not used for actual transmission are {r1y1, r2y2, r3, r4y3, r5, y4, y5}. The higher layer of the UE performs the resource selection among the candidate resource sets SA2 and SA4 corresponding to the remaining 2 TBs, and determines that SA2 has a largest quantity of resources (i.e., 2 resources are located in adjacent slots to the resources that are already selected), in which x1 is located in an adjacent slot with y1, x2 is located in an adjacent slot with y3, while x3, x4 and x5 are not located in adjacent slots to resources present in the higher layer of the UE. The resources {x1, x2, x3, x4, x5} are selected. Finally, resources {z1, z2, z3, z4, z5} in SA4 are selected for TB4, in which z1 is located in an adjacent slot with resource x1, and z3 is located in an adjacent slot with resource x2. As such, the higher layer of the UE performs the resource selection for all 4 TBs. Finally, the resources that are present in the higher layer of the UE and are already selected but not used for actual transmission are {r1y1 xlzl, rly2, r3, z2, z4, r4y3x2z3, r5, x3, x4, x5, z5, y4, y5}; then the higher layer of the UE selects two groups of resources with 4 continuous slots in the time domain, i.e., {rlylxlzl, r4y3x2z3}.

In addition, in an embodiment of the disclosure, each of the resources selected is a single-slot resource.

Further, in an embodiment of the disclosure, the method is performed by a higher layer of the UE, the higher layer being a layer above the physical layer. That is, the higher layer is located above the physical layer. For example, the higher layer may refer to a MAC layer.

In summary, in embodiments of the disclosure, the m TBs that simultaneously arrive at the physical layer of the UE are determined, in which m is a positive integer greater than 1; the order of resource selection is determined based on the quantity of resources located in adjacent slots to resources that are already selected by the higher layer of the UE but not used for actual transmission in the candidate resource set of each TB, in which resource selection is performed for a TB corresponding to a candidate resource set each time, the candidate resource set has a largest quantity of the resources located in adjacent slots to the resources that are already selected by the higher layer of the UE but not used for actual transmission; and the resources are sequentially selected for each TB among the m TBs based on the order determined. The embodiments of the disclosure provide a mechanism for continuous multi-slot resource selection, which may reduce situations where continuous resources in the time domain cannot be performed when a plurality of TBs arrive simultaneously, and thus enhance the feasibility of continuous multi-slot resource selection. The embodiments of the disclosure specifically disclose a solution for determining the order of resource selection based on the quantity of resources located in adjacent slots to resources that are already selected by the higher layer of the UE but not used for actual transmission in the candidate resource set of each TB. The disclosure provides a processing method for the scenario of "continuous multi-slot resource selection". When the m TBs simultaneously arrive at the physical layer of the UE, the resources may be sequentially selected for each TB among the m TBs based on the order of resource selection determined. As such, the m resources that are continuous in the time domain may be determined, thus achieving the continuous multi-slot resource selection, reducing the impact of LBT failure, and improving the channel access efficiency.

FIG. 5 is a flow chart illustrating a method for continuous multi-slot resource selection provided in an embodiment of the disclosure. The method is performed by a UE. As shown in FIG. 5, the method may include the following steps 501 to 503.

At step S501: m TBs that simultaneously arrive at a physical layer of the UE are determined, in which m is a positive integer greater than 1.

At step S502: an order of resource selection is determined based on a priority of each TB.

At step S503: resources are sequentially selected for each TB among the m TBs based on the order determined.

For example, in an embodiment of the disclosure, if priorities of the m TBs are different, the resource selection may be sequentially performed for the m TBs based on a descending order or an ascending order of priorities. The priorities of the m TBs may be preconfigured.

Further, in an embodiment of the disclosure, if the resource selection is sequentially performed for the m TBs based on the descending order of priorities, the UE first performs random resource selection for the TB with the highest priority in the candidate resource set corresponding to the TB; and sequentially performs the resource selection for remaining TBs in respective candidate resource sets of the remaining TBs based on the descending order of priorities. When performing the resource selection for each TB, the UE selects the resources located in adjacent slots to resources for one or more TBs that are present in the higher layer of the UE and are already selected but not used for actual transmission. The resources selected for each TB are defined as the resources that are already selected but not used for actual transmission.

In addition, in an embodiment of the disclosure, each of the resources selected is a single-slot resource.

Further, in an embodiment of the disclosure, the method is performed by a higher layer of the UE, the higher layer being a layer above the physical layer. That is, the higher layer is located above the physical layer. For example, the higher layer may refer to a MAC layer.

In summary, in embodiments of the disclosure, the m TBs that simultaneously arrive at the physical layer of the UE are determined, in which m is a positive integer greater than 1; the order of resource selection is determined based on a priority of each TB; and the resources are sequentially selected for each TB among the m TBs based on the order determined. The embodiments of the disclosure provide a mechanism for continuous multi-slot resource selection, which may reduce situations where continuous resources in the time domain cannot be performed when a plurality of TBs arrive simultaneously, and thus enhance the feasibility of continuous multi-slot resource selection. The embodiments of the disclosure specifically disclose a solution for determining the order of resource selection based on the priority of each TB. The disclosure provides a processing method for the scenario of "continuous multi-slot resource selection". When the m TBs simultaneously arrive at the physical layer of the UE, the resources may be sequentially selected for each TB among the m TBs based on the order of resource selection determined. As such, the m resources that are continuous in the time domain may be determined, thus achieving the continuous multi-slot resource selection, reducing the impact of LBT failure, and improving the channel access efficiency.

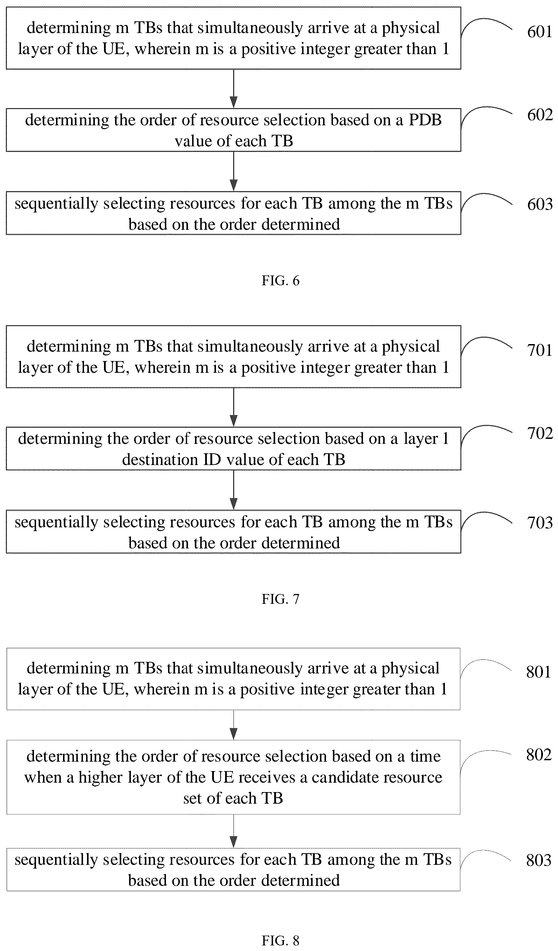

FIG. 6 is a flow chart illustrating a method for continuous multi-slot resource selection provided in an embodiment of the disclosure. The method is performed by a UE. As shown in FIG. 6, the method may include the following steps 601 to 603.

At step S601: m TBs that simultaneously arrive at a physical layer of the UE are determined, in which m is a positive integer greater than 1.

At step S602: an order of resource selection is determined based on a PDB value of each TB.

At step S603: resources are sequentially selected for each TB among the m TBs based on the order determined.

For example, in an embodiment of the disclosure, if PDB values of the m TBs are different, the resource selection may be sequentially performed for the m TBs in an ascending order or a descending order of the PDB values. For example, the resource selection may be preferentially performed for a TB with a small PDB value and a high delay requirement.

Further, in an embodiment of the disclosure, if the resource selection is sequentially performed for the m TBs based on the ascending order of PDB values, the UE first performs random resource selection for the TB with the smallest PDB value in the candidate resource set corresponding to the TB; and sequentially performs the resource selection for remaining TBs in respective candidate resource sets of the remaining TBs based on the ascending order of PDB values. When performing the resource selection for each TB, the UE selects the resources located in adjacent slots to resources for one or more TBs that are present in the higher layer of the UE and are already selected but not used for actual transmission. The resources selected for each TB are defined as the resources that are already selected but not used for actual transmission.

In addition, in an embodiment of the disclosure, each of the resources selected is a single-slot resource.

Further, in an embodiment of the disclosure, the method is performed by a higher layer of the UE, the higher layer being a layer above the physical layer. That is, the higher layer is located above the physical layer. For example, the higher layer may refer to a MAC layer.

In summary, in embodiments of the disclosure, the m TBs that simultaneously arrive at the physical layer of the UE are determined, in which m is a positive integer greater than 1; the order of resource selection is determined based on a PDB value of each TB; and the resources are sequentially selected for each TB among the m TBs based on the order determined. The embodiments of the disclosure provide a mechanism for continuous multi-slot resource selection, which may reduce situations where continuous resources in the time domain cannot be performed when a plurality of TBs arrive simultaneously, and thus enhance the feasibility of continuous multi-slot resource selection. The embodiments of the disclosure specifically disclose a solution for determining the order of resource selection based on the PDB value of each TB. The disclosure provides a processing method for the scenario of "continuous multi-slot resource selection". When the m TBs simultaneously arrive at the physical layer of the UE, the resources may be sequentially selected for each TB among the m TBs based on the order of resource selection determined. As such, the m resources that are continuous in the time domain may be determined, thus achieving the continuous multi-slot resource selection, reducing the impact of LBT failure, and improving the channel access efficiency.

FIG. 7 is a flow chart illustrating a method for continuous multi-slot resource selection provided in an embodiment of the disclosure. The method is performed by a UE. As shown in FIG. 7, the method may include the following steps 701 to 703.

At step S701: m TBs that simultaneously arrive at a physical layer of the UE are determined, in which m is a positive integer greater than 1.

At step S702: an order of resource selection is determined based on a layer 1 destination ID value of each TB.

At step S703: resources are sequentially selected for each TB among the m TBs based on the order determined.

For example, in an embodiment of the disclosure, if destination UEs of the m TBs are different, the resource selection may be sequentially performed for the m TBs in an ascending order or a descending order of layer 1 destination ID values of 16 bits corresponding to the m TBs.

Further, in an embodiment of the disclosure, if the resource selection is sequentially performed for the m TBs based on the ascending/descending order of layer 1 destination ID values, the UE first performs random resource selection for the TB with the smallest/largest destination ID value in the candidate resource set corresponding to the TB; and sequentially performs the resource selection for remaining TBs in respective candidate resource sets of the remaining TBs based on the ascending/descending order of PDB values. When performing the resource selection for each TB, the UE selects the resources located in adjacent slots to resources for one or more TBs that are present in the higher layer of the UE and are already selected but not used for actual transmission. The resources selected for each TB are defined as the resources that are already selected but not used for actual transmission.

In addition, in an embodiment of the disclosure, each of the resources selected is a single-slot resource.

Further, in an embodiment of the disclosure, the method is performed by a higher layer of the UE, the higher layer being a layer above the physical layer. That is, the higher layer is located above the physical layer. For example, the higher layer may refer to a MAC layer.

In summary, in embodiments of the disclosure, the m TBs that simultaneously arrive at the physical layer of the UE are determined, in which m is a positive integer greater than 1; the order of resource selection is determined based on a layer 1 destination ID value of each TB; and the resources are sequentially selected for each TB among the m TBs based on the order determined. The embodiments of the disclosure provide a mechanism for continuous multi-slot resource selection, which may reduce situations where continuous resources in the time domain cannot be performed when a plurality of TBs arrive simultaneously, and thus enhance the feasibility of continuous multi-slot resource selection. The embodiments of the disclosure specifically disclose a solution for determining the order of resource selection based on the layer 1 destination ID value of each TB. The disclosure provides a processing method for the scenario of "continuous multi-slot resource selection". When the m TBs simultaneously arrive at the physical layer of the UE, the resources may be sequentially selected for each TB among the m TBs based on the order of resource selection determined. As such, the m resources that are continuous in the time domain may be determined, thus achieving the continuous multi-slot resource selection, reducing the impact of LBT failure, and improving the channel access efficiency.

FIG. 8 is a flow chart illustrating a method for continuous multi-slot resource selection provided in an embodiment of the disclosure. The method is performed by a UE. As shown in FIG. 8, the method may include the following steps 801 to 803.

At step S801: m TBs that simultaneously arrive at a physical layer of the UE are determined, in which m is a positive integer greater than 1.

At step S802: an order of resource selection is determined based on a time when a higher layer of the UE receives a candidate resource set of each TB.

At step S803: resources are sequentially selected for each TB among the m TBs based on the order determined.

Further, in an embodiment of the disclosure, if the m TBs arrive simultaneously, there is no order between the TBs, and the physical layer is triggered by the m TBs to simultaneously perform the resource selection at slot n. For the m TBs, the physical layer generates N candidate resource sets, but the physical layer of the UE reports the N candidate resource sets, such as {SA1, SA2, ..., SAn}, to the higher layer of the UE at different times. The UE may determine the order of resource selection based on a time order in which the higher layer of the UE receives the candidate resource set of each TB.

In addition, in an embodiment of the disclosure, each of the resources selected is a single-slot resource.

Further, in an embodiment of the disclosure, the method is performed by a higher layer of the UE, the higher layer being a layer above the physical layer. That is, the higher layer is located above the physical layer. For example, the higher layer may refer to a MAC layer.

In summary, in embodiments of the disclosure, the m TBs that simultaneously arrive at the physical layer of the UE are determined, in which m is a positive integer greater than 1; the order of resource selection is determined based on a time when a higher layer of the UE receives a candidate resource set of each TB; and the resources are sequentially selected for each TB among the m TBs based on the order determined. The embodiments of the disclosure provide a mechanism for continuous multi-slot resource selection, which may reduce situations where continuous resources in the time domain cannot be performed when a plurality of TBs arrive simultaneously, and thus enhance the feasibility of continuous multi-slot resource selection. The embodiments of the disclosure specifically disclose a solution for determining the order of resource selection based on a time when a higher layer of the UE receives a candidate resource set of each TB. The disclosure provides a processing method for the scenario of "continuous multi-slot resource selection". When the m TBs simultaneously arrive at the physical layer of the UE, the resources may be sequentially selected for each TB among the m TBs based on the order of resource selection determined. As such, the m resources that are continuous in the time domain may be determined, thus achieving the continuous multi-slot resource selection, reducing the impact of LBT failure, and improving the channel access efficiency.

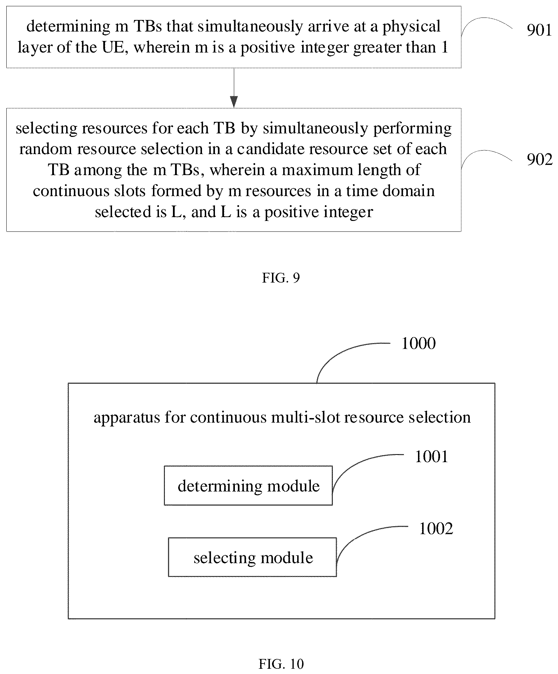

FIG. 9 is a flow chart illustrating a method for continuous multi-slot resource selection provided in an embodiment of the disclosure. The method is performed by a UE. As shown in FIG. 9, the method may include the following steps 901 to 903.

At step S901: m TBs that simultaneously arrive at a physical layer of the UE are determined, in which m is a positive integer greater than 1.

At step S902: resources for each TB are selected by simultaneously performing random resource selection in a candidate resource set of each TB among the m TBs, in which a maximum length of continuous slots formed by m resources in a time domain selected is L, and L is a positive integer.

In an embodiment of the disclosure, if L=m is satisfied, the m TBs are sent using the m resources selected each time. If L=m is not satisfied, the random resource selection is re-performed for the m TBs in the candidate resource set of each TB, until L=m or a number of resource selections reaches a threshold.

Further, in an embodiment of the disclosure, if the number of resource selections reaches the threshold, the m TBs are sent using m resources with a largest L value selected for a plurality of times previously.

Further, in an embodiment of the disclosure, the UE may send the corresponding m TBs to a receiving UE, and the receiving UE may receive the m TBs.

In addition, in an embodiment of the disclosure, each of the resources selected is a single-slot resource.

Further, in an embodiment of the disclosure, the method is performed by a higher layer of the UE, the higher layer being a layer above the physical layer. That is, the higher layer is located above the physical layer. For example, the higher layer may refer to a MAC layer.

In summary, in embodiments of the disclosure, the m TBs that simultaneously arrive at the physical layer of the UE are determined, in which m is a positive integer greater than 1; and the resources for each TB are selected by simultaneously performing random resource selection in the candidate resource set of each TB among the m TBs, in which the maximum length of continuous slots formed by m resources in the time domain selected is L, and L is a positive integer. The embodiments of the disclosure provide a mechanism for continuous multi-slot resource selection, which may reduce situations where continuous resources in the time domain cannot be performed when a plurality of TBs arrive simultaneously, and thus enhance the feasibility of continuous multi-slot resource selection. The disclosure provides a processing method for the scenario of "continuous multi-slot resource selection". When the m TBs simultaneously arrive at the physical layer of the UE, random resource selection may be performed to select the resources for each TB, in which the maximum length of continuous slots formed by the selected m resources in the time domain is L. As such, the resources that are continuous in the time domain may be determined, thus achieving the continuous multi-slot resource selection, reducing the impact of LBT failure, and improving the channel access efficiency.

FIG. 10 is a block diagram illustrating a structure of an apparatus for continuous multi-slot resource selection provided in an embodiment of the disclosure. As shown in FIG. 10, the apparatus 1000 is applied to a shared frequency band of a sidelink and is configured in a UE. The apparatus may include a determining module 1001 and a selecting module 1002.

The determining module 1001 is configured to determine m TBs that simultaneously arrive at a physical layer of the UE, in which m is a positive integer greater than 1.

The determining module 1001 is further configured to determine an order of resource selection for the m TBs.

The selecting module 1002 is configured to sequentially select resources for each TB among the m TBs based on the order determined.

In summary, in the apparatus for continuous multi-slot resource selection, the determining module is configured to determine m TBs that simultaneously arrive at the physical layer of the UE, in which m is a positive integer greater than 1. The determining module is further configured to determine the order of resource selection for the m TBs. The selecting module is configured to sequentially select resources for each TB among the m TBs based on the order determined. The embodiments of the disclosure provide a mechanism for continuous multi-slot resource selection, which may reduce situations where continuous resources in the time domain cannot be performed when a plurality of TBs arrive simultaneously, and thus enhance the feasibility of continuous multi-slot resource selection. The disclosure provides a processing method for the scenario of "continuous multi-slot resource selection". When the m TBs simultaneously arrive at the physical layer of the UE, the resources may be sequentially selected for each TB among the m TBs based on the order of resource selection determined. As such, the m resources that are continuous in the time domain may be determined, thus achieving the continuous multi-slot resource selection, reducing the impact of LBT failure, and improving the channel access efficiency.

Optionally, in an embodiment of the disclosure, the determining module 1001, when determining the order of resource selection for the m TBs, is specifically configured to: when selecting resources for any TB among the m TBs, preferentially select, in a candidate resource set of the any TB, resources located in adjacent slots to resources for one or more TBs that are present in a higher layer of the UE and are already selected but not used for actual transmission.

Optionally, in an embodiment of the disclosure, the determining module 1001 is further configured to: if m resources that are continuous in a time domain are selected for the m TBs, continuously send the m TBs on the m resources selected; if k resources that are continuous in the time domain are selected for the m TBs, where 1 < k < m and k is a positive integer, continuously send corresponding k TBs on the k resources selected.

Optionally, in an embodiment of the disclosure, each of the resources selected is a single-slot resource.

Optionally, in an embodiment of the disclosure, the determining module 1001, when determining the order of resource selection for the m TBs, is specifically configured to: determine the order of resource selection, based on a quantity of resources located in adjacent slots to resources that are already selected by a higher layer of the UE but not used for actual transmission in a candidate resource set of each TB, in which resource selection is performed for a TB corresponding to a candidate resource set each time, the candidate resource set has a largest quantity of the resources located in adjacent slots to the resources that are already selected by the higher layer of the UE but not used for actual transmission.

Optionally, in an embodiment of the disclosure, the determining module 1001, when determining the order of resource selection for the m TBs, is specifically configured to: determine the order of resource selection based on a priority of each TB.

Optionally, in an embodiment of the disclosure, the determining module 1001, when determining the order of resource selection for the m TBs, is specifically configured to: determine the order of resource selection based on a PDB value of each TB.

Optionally, in an embodiment of the disclosure, destination UEs corresponding to each TB are different, and the determining module 1001, when determining the order of resource selection for the m TBs, is specifically configured to: determine the order of resource selection based on a layer 1 destination ID value of each TB.

Optionally, in an embodiment of the disclosure, the determining module 1001, when determining the order of resource selection for the m TBs, is specifically configured to: determine the order of resource selection based on a time when a higher layer of the UE receives a candidate resource set of each TB.

Optionally, in an embodiment of the disclosure, the method is performed by a higher layer of the UE, the higher layer being a layer above the physical layer.

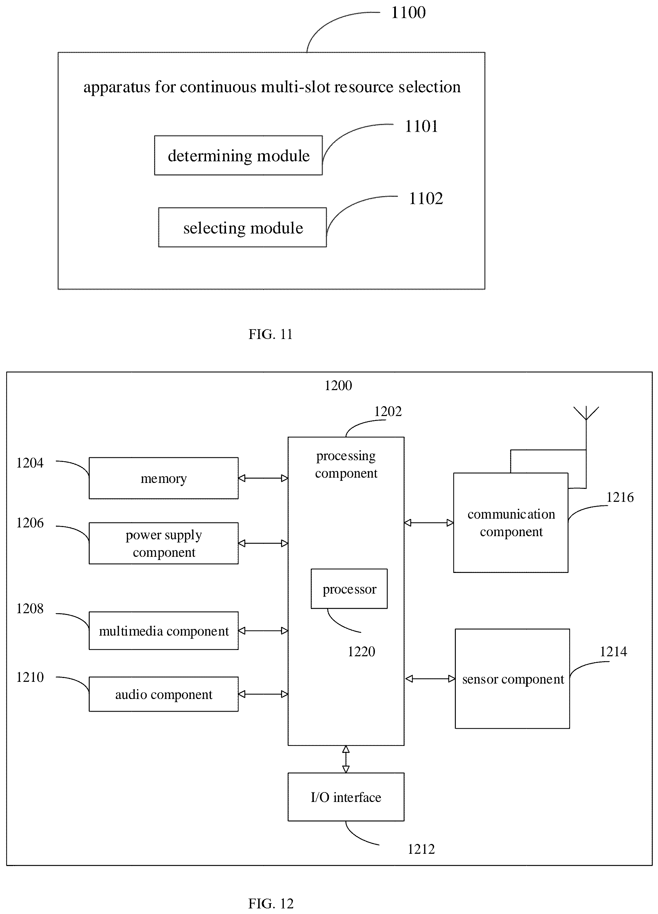

FIG. 11 is a block diagram illustrating a structure of an apparatus for continuous multi-slot resource selection provided in an embodiment of the disclosure. As shown in FIG. 11, the apparatus 1100 is applied to a shared frequency band of a sidelink, and is configured in a UE. The apparatus may include a determining module 1101 and a selecting module 1102.

The determining module 1101 is configured to determine m TBs that simultaneously arrive at a physical layer of the UE, in which m is a positive integer greater than 1.

The selecting module 1102 is configured to select resources for each TB by simultaneously performing random resource selection in a candidate resource set of each TB among the m TBs, in which a maximum length of continuous slots formed by m resources in a time domain selected is L, and L is a positive integer.

In summary, in the apparatus for continuous multi-slot resource selection, the determining module is configured to determine m TBs that simultaneously arrive at the physical layer of the UE, in which m is a positive integer greater than 1. The selecting module is configured to select resources for each TB by simultaneously performing random resource selection in the candidate resource set of each TB among the m TBs, in which the maximum length of continuous slots formed by m resources in the time domain selected is L, and L is a positive integer. The embodiments of the disclosure provide a mechanism for continuous multi-slot resource selection, which may reduce situations where continuous resources in the time domain cannot be performed when a plurality of TBs arrive simultaneously, and thus enhance the feasibility of continuous multi-slot resource selection. The disclosure provides a processing method for the scenario of "continuous multi-slot resource selection". When the m TBs simultaneously arrive at the physical layer of the UE, random resource selection may be performed to select the resources for each TB, in which the maximum length of continuous slots formed by the selected m resources in the time domain is L. As such, the resources that are continuous in the time domain may be determined, thus achieving the continuous multi-slot resource selection, reducing the impact of LBT failure, and improving the channel access efficiency.

Optionally, in an embodiment of the disclosure, the selecting module 1102 is further configured to: if L=m is satisfied, send the m TBs using the m resources selected each time; or if L=m is not satisfied, re-perform the random resource selection for the m TBs in the candidate resource set of each TB, until L=m or a number of resource selections reaches a threshold.

Optionally, in an embodiment of the disclosure, the selecting module 1102 is further configured to: if the number of resource selections reaches the threshold, send the m TBs using m resources with a largest L value selected for a plurality of times previously.

FIG. 12 is a block diagram illustrating a UE 1200 provided in an embodiment of the disclosure. For example, the UE 1200 may be a cell phone, a computer, a digital broadcasting terminal, a message transceiver device, a gaming console, a tablet device, a medical device, a fitness device, a personal digital assistant, etc.

Referring to FIG. 12, the UE 1200 may include one or more of the following components: a processing component 1202, a memory 1204, a power supply component 1206, a multimedia component 1208, an audio component 1210, an inputs/outputs (I/O) interface 1212, a sensor component 1214, and a communication component 1216.

The processing component 1202 generally controls the overall operation of the UE 1200, such as operations associated with displays, telephone calls, data communications, camera operations, and recording operations. The processing component 1202 may include at least one processor 1220 to execute instructions to accomplish all or some of the steps of the method described above. Alternatively, the processing component 1202 may include at least one module to facilitate interaction between the processing component 1202 and other components. For example, the processing component 1202 may include a multimedia module to facilitate interaction between the multimedia component 1208 and the processing component 1202.

The memory 1204 is configured to store various types of data to support operation at the UE 1200. Examples of such data include instructions for any application or method operated on the UE 1200, contact data, phone book data, messages, pictures, videos, etc. The memory 1204 may be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or CD-ROM.

The power supply component 1206 provides power to the various components of the UE 1200. The power supply component 1206 may include a power management system, at least one power supply, and other components associated with generating, managing, and distributing power for the UE 1200.

The multimedia component 1208 includes a screen providing an output interface between the UE 1200 and a user. In some embodiments, the screen may include a liquid crystal display (LCD) and a touch panel (TP). In case the screen includes a touch panel, the screen may be implemented as a touch screen to receive input signals from the user. The touch panel includes at least one touch sensor to sense touches, swipes, and gestures on the touch panel. The touch sensors may sense a boundary of a touch or swipe action, and detect a duration and pressure associated with the touch or swipe operation. In some embodiments, the multimedia component 1208 includes a front-facing camera and/or a rear-facing camera. The front camera and/or the rear camera may receive external multimedia data when the UE 1200 is in an operating mode, such as a shooting mode or a video mode. Each of the front camera or the rear camera may be a fixed optical lens system or have a focal length and optical zoom capability.

The audio component 1210 is configured to output and/or input audio signals. For example, the audio component 1210 includes a microphone (MIC) that is configured to receive external audio signals when the UE 1200 is in an operational mode, such as a call mode, a recording mode, and a voice recognition mode. The received audio signals may be further stored in the memory 1204 or sent in the communication component 1216. In some embodiments, the audio component 1210 further includes a speaker for outputting audio signals.

The I/O interface 1212 provides an interface between the processing component 1202 and a peripheral interface module, said peripheral interface module may be a keypad, a click wheel, buttons, etc. These buttons may include, but are not limited to: a home button, a volume button, a start button, and a lock button.

The sensor component 1214 includes at least one sensor for providing various aspects of status assessment for the UE 1200. For example, the sensor component 1214 may detect an open/closed state of the UE 1200, the relative positioning of components, such as the components being the display and keypad of the UE 1200, the sensor component 1214 may also detect a change in the position of the UE 1200 or one of the components of the UE 1200, the presence or absence of user contact with the UE 1200, the orientation of the UE 1200 or acceleration/deceleration of the UE 1200, and the temperature change of the UE 1200. The sensor component 1214 may include a proximity sensor configured to detect the presence of a nearby object in the absence of any physical contact. The sensor component 1214 may also include an optical sensor, such as a CMOS or CCD image sensor, for use in imaging applications. In some embodiments, the sensor component 1214 may also include an acceleration sensor, a gyroscope sensor, a magnetic sensor, a pressure sensor, or a temperature sensor.

The communication component 1216 is configured to facilitate communication between the UE 1200 and other devices by wired or wireless means. The UE 1200 may access a wireless network based on a communication standard, such as Wi-Fi, 2G or 3G, or their combination. In an exemplary embodiment, the communication component 1216 receives broadcast signals or broadcast-related information from an external broadcast management system in a broadcast channel. In an exemplary embodiment, the communication component 1216 further includes a near field communication (NFC) module to facilitate short-range communication. For example, in the NFC module may be implemented based on radio frequency identification (RFID) technology, infrared data association (IrDA) technology, ultra wide band (UWB) technology, Bluetooth (BT) technology, and other technologies.

In exemplary embodiments, the UE 1200 may be implemented by at least one applicationspecific integrated circuit (ASIC), digital signal processors (DSP), digital signal processing device (DSPD), programmable logic device (PLD), field-programmable gate arrays (FPGA), controller, microcontroller, microprocessor, or other electronic components for performing the methods described above.

In the above embodiments provided in the disclosure, the methods according to embodiments of the disclosure are described from the perspectives of the network device and the UE, respectively. In order to realize each of the functions in the method according to the above embodiments of the disclosure, the network device and the UE may include a hardware structure, a software module, and realize each of the above functions in the form of the hardware structure, the software module, or a combination of the hardware structure and the software module. A certain function of the above functions may be executed in the form of the hardware structure, the software module, or the combination of the hardware structure and the software module.

In the above embodiments provided in the disclosure, the methods according to embodiments of the disclosure are described from the perspectives of the network device and the UE, respectively. In order to realize each of the functions in the method according to the above embodiments of the disclosure, the network device and the UE may include a hardware structure, a software module, and realize each of the above functions in the form of the hardware structure, the software module, or a combination of the hardware structure and the software module. A certain function of the above functions may be executed in the form of the hardware structure, the software module, or the combination of the hardware structure and the software module.

Embodiments of the disclosure provide a communication device. The communication device may include a transceiver module and a processing module. The transceiver module may include a transmitting module and/or a receiving module, the transmitting module is for realizing a transmitting function, and the receiving module is for realizing a receiving function, and the transceiver module may realize the transmitting function and/or the receiving function.

The communication device may be a UE (such as the UE in the method embodiments described above), a device in the UE, or a device that may be used in conjunction with the UE. Alternatively, the communication device may be a network device, a device in the network device, or a device that may be used in conjunction with the network device.

Embodiments of the disclosure provide another communication device. The communication device may be a network device, a UE (such as the UE in the method embodiments described above), a chip, a system on chip or a processor that supports the network device to implement the method, or a chip, a system on chip or a processor that supports the UE to implement the method. The communication device may be configured to implement the method described in the method embodiments, which may refer to descriptions in the method embodiments.

The communication device may include one or more processors. The processor may include a general purpose processor or a dedicated processor. For example, the processor may be a baseband processor or a central processor. The baseband processor may be configured to process a communication protocol and communication data, and the central processor may be configured to control a communication device (e.g., a network side device, a baseband chip, a UE, a UE chip, a DU or CU, etc.), to execute a computer program, and process data of the computer program.

Optionally, the communication device may further include one or more memories with a computer program stored. The processor executes the computer program so that the communication device performs the method as described in the above method embodiments. Optionally, the memory may further store data. The communication device and the memory may be independently configured or integrated together.

Optionally, the communication device may further include a transceiver and an antenna. The transceiver may be referred to as a transceiving unit, a transceiver or a transceiving circuit, which may be configured to achieve a transceiving function. The transceiver may include a receiver and a transmitter. The receiver may be referred to as a receiver or a receiving circuit, etc., for implementing a receiving function; the transmitter may be referred to as a transmitter or a transmitting circuit, etc. for implementing a transmitting function.

Optionally, the communication device may further include one or more interface circuits. The interface circuit is configured to receive code instructions and transmit the code instructions to the processor. The processor runs the code instructions so that the communication device performs the method according to the above method embodiments.

If the communication device is a UE (such as the UE in the method embodiments described above), the processor is configured to perform any of the methods shown in FIG. 2 to FIG. 9.

In an implementation, the processor may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor may be stored with a computer program. The computer program is running on the processor so that the communication device performs the method as described in the above method embodiments. The computer program may be solidified in the processor, in which case the processor may be implemented by hardware.

In an implementation, the communication device may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor(BJT), bipolar CMOS(BiCMOS), silicon germanium(SiGe) and gallium arsenide(GaAs).

The communication device described in the above embodiments may be a network device or a UE (such as the UE in the method embodiments described above), but the scope of the communication device described in the disclosure is not limited, and a structure of the communication device may not be limited. The communication device may be a stand-alone device or may be a part of a larger device. For example, the communication device may be the following.
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal device, a smart terminal device, a cellular phone, a wireless device, a handset, a mobile unit, a vehicle device, a network device, a cloud device, an artificial intelligence device, etc.;
(6) others, and so forth.

In the case that the communication device may be a chip or a system on chip, the chip includes a processor and an interface. The number of processors may be one or more and the number of interfaces may be more than one.

Optionally, the chip further includes a memory, configured to save necessary computer program and data.

Those skilled in the related art may understand that various illustrative logical blocks and steps listed in embodiments of the disclosure, may be implemented by electronic hardware, computer software or a combination of electronic hardware and computer software. Whether the function is implemented by hardware or software depends on specific applications and design requirements for an overall system. Those skilled in the art may implement the functions by using various methods for each specific application, but such an implementation should not be understood as beyond the protection scope of embodiments of the disclosure.

A readable storage medium with instructions stored is further provided in the disclosure. When the instructions are executed by a computer, steps in the any one method embodiment are implemented.

A computer program product is further provided in the disclosure. The computer program product implements functions of the above any one method embodiment when executed by a processor.

**In** the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in disclosure are distinguished merely for convenience of description, and are not intended to limit the scope of embodiments of the disclosure, but also to indicate an order of precedence.

The phase "at least one" in the disclosure may also be described as one or more, and the phase "a plurality of" may refer to two, three, four or more, which is not limited in the disclosure. In embodiments of the disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Other implementations of the embodiments of the disclosure will be readily apparent to those skilled in the art from consideration of the specification and practice of the disclosure disclosed herein. This application is intended to cover any modification, use or adaptation of the embodiments of the disclosure, these modifications, uses or adaptations follow the general principles of the embodiments of the disclosure and include those in the technical field not disclosed by the embodiments of the disclosure common knowledge or common technical means. The specification and examples are to be considered exemplary only, with a true scope and spirit of the embodiments of the disclosure being indicated by the following claims.

It should be understood that the embodiments of the disclosure are not limited to the precise structures described above and shown in the figures, and various modifications and changes can be made without departing from the scope of the disclosure. The scope of embodiments of the disclosure is limited only by the appended claims.

## Claims

1. A method for continuous multi-slot resource selection, applied to a shared frequency band of a sidelink, performed by a user equipment (UE), the method comprising:
determining m transport blocks (TBs) that simultaneously arrive at a physical layer of the UE, wherein m is a positive integer greater than 1;
determining an order of resource selection for the m TBs; and
sequentially selecting resources for each TB among the m TBs based on the order determined.

2. The method according to claim 1, wherein determining the order of resource selection for the m TBs comprises:
when selecting resources for any TB among the m TBs, preferentially selecting, in a candidate resource set of the any TB, resources located in adjacent slots to resources for one or more TBs that are present in a higher layer of the UE and are already selected but not used for actual transmission.

3. The method according to claim 1 or 2, comprising:
if m resources that are continuous in a time domain are selected for the m TBs, continuously sending the m TBs on the m resources selected;
if k resources that are continuous in the time domain are selected for the m TBs, where 1 < k < m and k is a positive integer, continuously sending corresponding k TBs on the k resources selected.

4. The method according to claim 1 or 2, wherein each of the resources selected is a single-slot resource.

5. The method according to claim 1, wherein determining the order of resource selection for the m TBs comprises:
determining the order of resource selection, based on a quantity of resources located in adjacent slots to resources that are already selected by a higher layer of the UE but not used for actual transmission in a candidate resource set of each TB, wherein resource selection is performed for a TB corresponding to a candidate resource set each time, the candidate resource set has a largest quantity of the resources located in adjacent slots to the resources that are already selected by the higher layer of the UE but not used for actual transmission.

6. The method according to claim 1, wherein determining the order of resource selection for the m TBs comprises:
determining the order of resource selection based on a priority of each TB.

7. The method according to claim 1, wherein determining the order of resource selection for the m TBs comprises:
determining the order of resource selection based on a packet delay budget (PDB) value of each TB.

8. The method according to claim 1, wherein destination UEs corresponding to each TB are different, and determining the order of resource selection for the m TBs comprises:
determining the order of resource selection based on a layer 1 destination identification (ID) value of each TB.

9. The method according to claim 1, determining the order of resource selection for the m TBs comprises:
determining the order of resource selection based on a time when a higher layer of the UE receives a candidate resource set of each TB.

10. The method according to claim 1, wherein the method is performed by a higher layer of the UE, the higher layer being a layer above the physical layer.

11. A method for continuous multi-slot resource selection, applied to a shared frequency band of a sidelink, performed by a user equipment (UE), the method comprising:
determining m transport blocks (TBs) that simultaneously arrive at a physical layer of the UE, wherein m is a positive integer greater than 1; and
selecting resources for each TB by simultaneously performing random resource selection in a candidate resource set of each TB among the m TBs, wherein a maximum length of continuous slots formed by m resources in a time domain selected is L, and L is a positive integer.

12. The method according to claim 11, comprising:
if L=m is satisfied, sending the m TBs using the m resources selected each time; or
if L=m is not satisfied, re-performing the random resource selection for the m TBs in the candidate resource set of each TB, until L=m or a number of resource selections reaches a threshold.

13. The method according to claim 12, wherein
if the number of resource selections reaches the threshold, the m TBs are sent using m resources with a largest L value selected for a plurality of times previously.

14. An apparatus for continuous multi-slot resource selection, applied to a shared frequency band of a sidelink, configured in a user equipment (UE), comprising:
a determining module, configured to determine m transport blocks (TBs) that simultaneously arrive at a physical layer of the UE, wherein m is a positive integer greater than 1;
the determining module is further configured to determine an order of resource selection for the m TBs; and
a selecting module, configured to sequentially select resources for each TB among the m TBs based on the order determined.

15. An apparatus for continuous multi-slot resource selection, applied to a shared frequency band of a sidelink, configured in a user equipment (UE), comprising:
a determining module, configured to determine m transport blocks (TBs) that simultaneously arrive at a physical layer of the UE, wherein m is a positive integer greater than 1; and
a selecting module, configured to select resources for each TB by simultaneously performing random resource selection in a candidate resource set of each TB among the m TBs, wherein a maximum length of continuous slots formed by m resources in a time domain selected is L, and L is a positive integer.

16. A user equipment (UE), comprising a processor and a memory, wherein the memory stores a computer program, which, when executed by the processor, cause the device to implement the method according to any one of claims 1 to 10 or claims 11 to 13.

17. A communication device, comprising: a processor and an interface circuit; wherein
the interface circuit is configured to receive code instructions and transmit the code instructions to the processor; and
the processor is configured to execute the code instructions to implement the method according to any one of claims 1 to 10 or claims 11 to 13.

18. A computer-readable storage medium, configured to store instructions, wherein when the instructions are executed, the method according to any one of claims 1 to 10 or claims 11 to 13 is implemented.
